# EUROPÄISCHE PATENTANMELDUNG

(11) **EP 1 619 146 A1**
(43) Veröffentlichungstag der Anmeldung: **25.01.2006**
(21) Anmeldenummer: 05105462.5
(22) Anmeldetag: 21.06.2005
(51) Int. Cl.: B65G 47/54, B65G 47/38

(54) **Vorrichtung zum Verteilen von Ladungsträgern für Stückgüter**

(30) Priorität: 20.07.2004 DE 102004035125
(71) Anmelder: SIEMENS AKTIENGESELLSCHAFT, 80333 München (DE)
(72) Erfinder: Suess, Heiko, 60385, Frankfurt (DE)

(57) **Zusammenfassung**

Die Erfindung betrifft eine Vorrichtung zum Verteilen von auf einer Haupt- oder Zuführstrecke transportierten Ladungsträgern für Stückgüter, insbesondere Paletten, auf einer Mehrzahl von quer an die Haupt- oder Zuführstrecke anschließenden Nebenbahnen mittels eines Übergabeelements. Um eine Vorrichtung zum Verteilen von Ladungsträgern für Stückgüter zu schaffen, die bei geringem Bauaufwand eine gegenüber den bekannten Lösungen deutlich erhöhte Durchsatzleistung aufweist wird vorgeschlagen, dass das Übergabeelement (11) als unterhalb der Haupt- oder Zuführstrecke (2) verfahrbarer Wagen (8) mit einem darauf angeordneten Übergabeelement (11) ausgebildet ist, das aus einer unterhalb der Transportebene der Haupt- oder Zuführstrecke (2) positionierbaren Verfahrposition in eine oberhalb der Förderebene, mit einer der Nebenbahnen (7a bis 7d) fluchtende, Übergabeposition heb- und senkbar ist.

## Beschreibung

Die Erfindung betrifft eine Vorrichtung zum Verteilen von auf einer Haupt- oder Zuführstrecke transportierten Ladungsträgern für Stückgüter, insbesondere Paletten, auf einer Mehrzahl von quer an die Haupt- oder Zuführstrecke anschließenden Nebenbahnen mittels eines Übergabeelements zum Aufnehmen und Abheben jeweils eines Ladungsträgers von der Haupt- oder Zuführstrecke und Übergeben an eine vorher festgelegte Nebenbahn.

Vorrichtungen der beschriebenen Art werden beispielsweise in Auslagerungsbereichen von Hochregallagern eingesetzt, um Ladungsträger, in der Regel Paletten, an Plätze zu transportieren, wo beispielsweise LKW-Touren zusammengestellt werden oder Waren gepuffert werden. Die Haupt- oder Zuführstrecke, über die die Ladungsträger den Nebenbahnen zugeleitet werden, sind gewöhnlich als Stetigförderer ausgeführt, die mit Ausschleuselementen korrespondieren, mit deren Hilfe die Ladungsträger von der Haupt- oder Zuführstrecke auf die Nebenbahnen überführt werden. Die Nebenbahnen sind bei bekannten Vorrichtungen dieser Art im rechten Winkel an die Haupt- oder Zuführstrecke angeschlossen, so dass auch das Übergabeelement im rechten Winkel zur Haupt- oder Zuführstrecke ausgerichtet ist um die Ladungsträger der Nebenbahn zu übergeben.

Als Übergabeelement sind bekanntermaßen Hubtische oder Querförderer vorgesehen, die heb- und senkbar zwischen den Förderelementen der Haupt oder Zuführstrecke angeordnet sind und durch Untergreifen der Ladungsträger diese von der Haupt oder Zuführstrecke abheben und der zugeordneten Nebenbahn übergeben. Die Übergabeelemente sind ortsfest angeordnet, d. h. jeder Nebenbahn ist ein Übergabeelement zugeordnet, deren Hubmechanismus aktiviert wird, sobald sich ein Ladungsträger oberhalb des Übergabeelementes befindet.

Es ist auch bekannt, Verfahrwagen einzusetzen, die die Ladungsträger von einer Übergabestrecke abholen und zu dem Bestimmungsort transportieren, in diesem Fall ist jedem Verfahrwagen eine Zuführstrecke zugeordnet.

Während bei der letztgenannten Vorrichtung die Durchsatzleistung durch den Zeitaufwand beschränkt ist, der erforderlich ist, um jede Palette vom Zuförderplatz einzeln abzuholen, ist der Bauaufwand bei der erstgenannten Lösung unwirtschaftlich, weil jeder Nebenbahn ein eigenes Übergabeelement zugeordnet werden muss. Bei der Verwendung von Verfahrwagen werden zwar nur einzelne Übergabeelemente mehreren Nebenbahnen zugeordnet, doch ist der Platzbedarf in Folge der großen Anzahl von Förderelementen, erheblich, die benötigt werden, um jedem Verfahrwagen die Ladungsträger zuzuführen.

Aufgabe der vorliegenden Erfindung ist es, ausgehend von dem geschilderten Stand der Technik, eine Vorrichtung zum Verteilen von Ladungsträgern für Stückgüter zu schaffen, die bei geringem Bauaufwand eine gegenüber den bekannten Lösungen deutlich erhöhte Durchsatzleistung aufweist.

Zur Lösung der Aufgabe wird erfindungsgemäß vorgeschlagen, dass die Übergabeelemente als unterhalb der Haupt- oder Zuführstrecke verfahrbarer Wagen mit einem darauf angeordneten Übergabeelement ausgebildet ist, dass aus einer unterhalb der Transportebene der Haupt- oder Zuführstrecke positionierbaren Verfahrposition in eine oberhalb der Förderebene, mit einer der Nebenbahnen fluchtende, Übergabeposition heb- und senkbar ist.

Die Erfindung schlägt somit eine Vorrichtung vor, bei der die Ladungsträger auf einem Stetigförderer in die gewünschte Übergabeposition vor einer der Nebenbahnen transportiert wird und dort nicht von einem festen Übergabeelement übergeben wird, sondern von einem unterhalb der Haupt- oder Zuführstrecke verfahrbaren Wagen, der mit dem heb- und senkbaren Übergabeelement ausgestattet ist. Dieser Wagen wird stets dorthin gefahren, wo eine Übergabe stattfindet, so dass ein- und derselbe Wagen eine Vielzahl von Nebenbahnen zwecks der Auslagerung der Ladungsträger bedienen kann.

Dadurch, dass die Haupt- und Zuführstrecke als Stetigförderer ausgebildet ist, können die Ladungsträger direkt vom Lager kommend, zu der jeweils zuzuordnenden Nebenbahn transportiert werden, wo die Übergabe unmittelbar durch den darunter gefahrenen oder bereits dort wartenden Wagen stattfinden kann.

Vorzugsweise ist die Haupt- oder Zufuhrstrecke als Ketten- oder Gurtförderer ausgebildet. Bei derartigen Förderern ist der Platz zwischen zwei im Abstand angeordneten Ketten oder Gurten frei für ein Übergabeelement, die erfindungsgemäß auf dem Wagen vorgesehen ist, der seinerseits unterhalb des Förderers entlang seiner Transportrichtung verfahrbar ist.

Vorzugsweise ist der Wagen auf längs dem Traggerüst der Haupt- oder Zuführstrecke verlegten Schienen verfahrbar. Die Schienen können am Planum verlegt sein, aber auch unmittelbar am Traggerüst befestigt sein. Als Antrieb sind herkömmliche Antriebseinrichtungen denkbar, wie Einzelmotoren, Kettentriebe, Zahntriebe oder dgl.

Nach einem der anderen Merkmal der Erfindung ist das Übergabeelement mechanisch- oder druckmittelbetrieben heb- und senkbar. In der Verfahrstellung des Wagens ist das Übergabeelement abgesenkt und kann somit unter den auf der Haupt- oder Zufuhrstrecke aufliegenden Paletten hindurchfahren.

Das Übergabeelement der erfindungsgemäßen Vorrichtung ist nach einem weiteren günstigen Merkmal als Querförderer ausgebildet. Der Querförderer selbst kann als Rollenförderer mit in Förderrichtung der Haupt- oder Führungsstrecke ausgerichteten Rollenachsen oder als Kettenförderer ausgeführt sein, über den ein Ladungsträger quer zur Haupt- oder Zuführstrecke auf den an das Übergabeelement anschließenden Förderer der Nebenbahn übergeben werden kann. Dazu kann auch der Rollenförderer antreibbar ausgebildet sein oder es können zusätzliche mechanische Mittel oder Antriebe vorgesehen sein, um den Ladungsträger vom Rollenförderer auf die Nebenbahn zu überführen.

Vorzugsweise sind die Nebenbahnen als Bereitstellungs- oder Pufferbahnen ausgebildet. Sollen auf den Bahnen beispielsweise Touren zusammengestellt werden, so werden alle zu einer Tour gehörenden Ladungsträger auf ein- und derselben Nebenbahn bereitgestellt.

Wenn der Querförderer und die Nebenbahn erfindungsgemäß als Gefällerollenbahn ausgebildet sind, so kann ein separater Antrieb für beide entfallen. In diesem Fall ist auch das Übergabeelement in Richtung Nebenbahn geneigt ausgeführt, um nach Freigabe eines Rückhalteelementes den Ladungsträger mittels Schwerkraft auf der Gefällerollenbahn nach unten rollen zu lassen.

Selbstverständlich ist es im Rahmen der Erfindung auch denkbar, einer Haupt- oder Zuführstrecke mehrere unabhängig voneinander steuerbare Wagen zuzuordnen, um die Durchsetzleistung noch weiter zu erhöhen. Durch eine entsprechende übergeordnete Logistik werden die Wagen so gesteuert, dass jeweils ein Wagen an eine Übergabeposition gefahren oder dort positioniert wird, wo der Ladungsträger von der Haupt- oder Zuführstrecke auf die Nebenbahn übergeben werden soll.

Durch die Mittel und Maßnahmen der Erfindung entfallen die bei der Verwendung bekannter Verfahrwagen erforderlichen mehrfachen Zuführstrecken. Da die Wagen die Ladungsträger nicht von einem Zuförderplatz abholen müssen, ist die Durchsatzleistung deutlich höher als bei den bekannten Lösungen. Gegenüber der Stetigfördertechnik mit an jeder Ausschleusstelle separaten Übergabeelementen, zeichnet sich die vorliegende Erfindung durch die Einsparungen von Fördermitteln aus. Die Anlage wird preisgünstiger und auch platzsparender, so dass sich in Verbindung mit der erhöhten Durchsatzleistung ein erheblicher Vorteil gegenüber den bekannten Lösungen ergibt.

Ein Ausführungsbeispiel der Erfindung ist in der Zeichnung dargestellt und wird nachfolgend beschrieben. Es zeigt:
- Figur 1: eine Draufsicht auf eine erfindungsgemäße Vorrichtung in schematischer Darstellung und
- Figur 2: einen Querschnitt durch die Vorrichtung nach Figur 1.

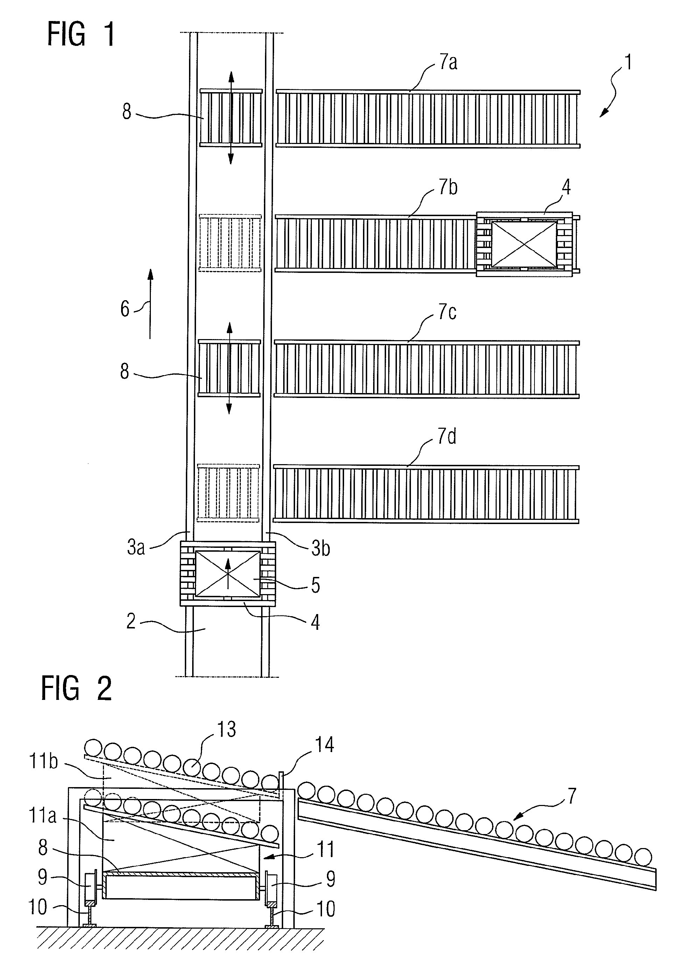

In Figur 1 ist in schematischer Darstellung eine insgesamt mit 1 bezeichnete Vorrichtung zum Verteilen von auf Paletten transportierten Stückgütern gezeigt. In der gezeichneten Draufsicht erkennt man die Haupt- oder Zuführstrecke 2, die hier aus einem Kettenförderer mit zwei im parallelen Abstand angeordneten Förderketten 3a und 3b besteht. Auf den Förderketten 3a, 3b liegt beidseitig eine Palette 4 auf, auf der ein Stückgutteil 5 transportiert wird. Die Palette 4 kommt von der Auslagerungszone eines nicht dargestellten Lagers und wird in Transportrichtung 6 über die Haupt- oder Zuführstrecke 2 gefördert. Von der Haupt- oder Zuführstrecke 2 zweigen im rechten Winkel dazu Nebenbahnen 7a bis 7d ab, die zur Bereitstellung von Paletten 4, beispielsweise an einem LKW-Terminal, dienen. Zur Übergabe der Paletten 4 von der Haupt- oder Zuführstrecke 2 auf eine der Nebenbahnen 7a bis 7d ist ein Übergabeelement vorgesehen, die als Wagen 8 ausgebildet ist. Der Wagen 8 ist mit vier Rädern 9 (Fig. 2) versehen, die auf Schienen 10 abrollen, welche in Längsrichtung der Haupt- oder Zuführstrecke verlegt sind. Der Wagen 8 trägt ein Übergabeelement 11, das gegenüber dem Rahmen des Wagens 8 heb- und senkbar ist. In der abgesenkten Stellung 11a befindet sich das Übergabeelement mit den Rollen 12 eines darauf angeordneten Querförderers unterhalb der Transportebene der Förderketten 3a, 3b der Haupt- oder Zuführstrecke 2 und ist deshalb in der Lage, unter einer auf der Haupt- oder Zuführstrecke 2 aufliegenden Palette 4 entlang der Haupt- oder Zuführstrecke 2 hindurch zu fahren. Im Bereich einer der Nebenbahnen 7a bis 7d wird die Palette mit bekannten Steuerungsmitteln angehalten, der Wagen 8 wird unter die Palette gefahren. Das Übergabeelement 11 wird in eine Position angehoben, in der sie mit der jeweiligen Nebenbahn 7 fluchtet. Wenn, wie in dem in Figur 2 dargestellten Beispiel die Nebenbahn als Gefällerollenbahn ausgeführt ist und auch der auf dem Übergabeelement 11 angeordnete Querförderer als Rollenbahn 13 ausgebildet und gleichfalls geneigt angeordnet ist, kann die Palette nach Lösen eines Anschlags 14 von der Haupt- oder Zuführstrecke auf die Nebenbahn überführt und an deren Ende gepuffert werden, beispielsweise um eine LKW-Tour zusammenzustellen.

Wie in Figur 1 in der oberen Hälfte der Zeichnung dargestellt, können auch zwei Wagen auf einer Haupt- oder Zuführstrecke verfahren und damit die Kapazität erhöhen. Dadurch, dass die Wagen 8 jeweils unter den Paletten 4, die auf der Haupt- oder Zuführstrecke 2 transportiert werden, hindurchfahren, können entsprechend einer sinnvollen Logistik mehrere Wagen eingesetzt werden, um gleichzeitig zwei oder mehrere Nebenbahnen zu bedienen.

## Patentansprüche

1. Vorrichtung zum Verteilen von auf einer Haupt- oder Zuführstrecke transportierten Ladungsträgern für Stückgüter, insbesondere Paletten, auf eine Mehrzahl von quer an die Haupt- oder Zuführstrecke anschließenden Nebenbahnen mittels eines Übergabeelementes zum Aufnehmen und Abheben jeweils eines Ladungsträgers von der Haupt- oder Zuführstrecke und Übergeben an eine vorher festgelegte Nebenbahn, **dadurch gekennzeichnet, dass** das Übergabeelement (11) als unterhalb der Haupt- oder Zuführstrecke (2) verfahrbarer Wagen (8) mit einem darauf angeordneten Übergabeelement (11) ausgebildet ist, das aus einer unterhalb der Transportebene der Haupt- oder Zuführstrecke (2) positionierbaren Verfahrposition in eine oberhalb der Förderebene, mit einer der Nebenbahnen (7a bis 7d) fluchtende, Übergabeposition heb- und senkbar ist.

2. Vorrichtung nach Anspruch 1, **dadurch gekennzeichnet, dass** die Haupt- oder Zuführstrecke (2) als Stetigförderer ausgebildet ist.

3. Vorrichtung nach Anspruch 1 und 2, **dadurch gekennzeichnet, dass** die Haupt- oder Zuführstrecke (2) als Ketten- oder Gurtförderer ausgebildet ist.

4. Vorrichtung nach einem der Ansprüche 1 bis 3, **dadurch gekennzeichnet, dass** der Wagen (8) auf längs im Traggerüst der Haupt- oder Zuführstrecke () verlegten Schienen (9) verfahrbar ist.

5. Vorrichtung nach Anspruch 1, **dadurch gekennzeichnet, dass** das Übergabeelement (11) mechanisch oder druckmittelbetrieben heb- und senkbar ist.

6. Vorrichtung nach Anspruch 5, **dadurch gekennzeichnet, dass** das Übergabeelement (11) als Querförderer ausgebildet ist.

7. Vorrichtung nach Anspruch 6, **dadurch gekennzeichnet, dass** der Querförderer als Rollenförderer (13) ausgebildet ist.

8. Vorrichtung nach Anspruch 6, **dadurch gekennzeichnet, dass** der Querförderer als Kettenförderer ausgebildet ist.

9. Vorrichtung nach Anspruch 7, **dadurch gekennzeichnet, dass** der Rollenförderer (13) antreibbar ausgebildet ist.

10. Vorrichtung nach einem der Ansprüche 1 bis 9, **dadurch gekennzeichnet, dass** die Nebenbahnen (7a bis 7d) Bereitstellungs- oder Pufferbahnen sind.

11. Vorrichtung nach einem der Ansprüche 1 bis 10, **dadurch gekennzeichnet, dass** der Querförderer (13) und die Nebenbahnen (7a bis 7d) als Gefällerollenbahn ausgebildet sind.

12. Vorrichtung nach einem der Ansprüche 1 bis 11, **dadurch gekennzeichnet, dass** einer Haupt- oder Zuführstrecke (2) mehrere unabgängig voneinander steuerbare Wagen (8) zugeordnet sind.
